# EUROPEAN PATENT SPECIFICATION

(11) **EP 2 154 929 B1**
(45) Date of publication and mention of the grant of the patent: **19.10.2011**
(21) Application number: 08773212.9
(22) Date of filing: 17.07.2008
(51) Int. Cl.: H04W 84/00, H04W 88/18

(54) **METHOD AND DEVICE FOR MESSAGE PASSING**
VERFAHREN UND VORRICHTUNG ZUR NACHRICHTENÜBERMITTLUNG
PROCÉDÉ ET DISPOSITIF DE PASSAGE DE MESSAGE

(30) Priority: 19.07.2007 CN 200710137777
(43) Date of publication of application: 17.02.2010
(73) Proprietor: Huawei Technologies Co., Ltd., Longgang District, Shenzhen Guangdong 518129 (CN)
(72) Inventor: CHEN, Ning, Shenzhen, Guangdong 518129 (CN); HOU, Xiaolong, Shenzhen, Guangdong 518129 (CN)
(74) Representative: Körber, Martin Hans
(86) International application number: PCT/CN2008/071682
(87) International publication number: WO 2009/010015

(56) References cited:
- CN-A- 1 385 989
- CN-A- 1 917 538
- CN-A- 101 001 411
- US-A1- 2005 036 457

## Description

### FIELD OF THE INVENTION

The present disclosure relates to the field of telecommunication technology, and more particularly, to a method and device for transferring a message.

### BACKGROUND

With the rapid development of mobile communication technology, the Short Message Service and the Multimedia Message Service, etc., as mature and reliable wireless data services, are more and more widely used.

In the mean time, there are more and more types of message services, such as various value added message services. The Message Forwarding Service (MFS) and the Message Copy Service (MCS) are taken as examples. The MFS refers to a message transfer service similar to Call Forwarding Service. For example, the user does not receive messages. In contrast, he forwards all messages intended for him to another number. Alternatively, he does not receive the messages sent from certain numbers, but transfers these messages to a specified number, not affecting the reception of messages sent from other numbers. The MCS refers to a message service similar to "message copying". For example, the message sent from others to the user may not only be received by the user himself, but also be sent to another number specified by the user.

However, the above two types of services are each recursively triggered (referred to as recursively triggered services), therefore, it is highly possible that a closed loop is formed. With the wide application of recursively triggered services, the problem of loop transfer of services becomes prominent. For example, user A sends a message to user B, but user B has set to forward messages to user C, and user C has set to forward messages back to user B. In this case, if user A sends the message to user B, the message is forwarded between users B and C repeatedly forming a closed loop. Alternatively, if user B has set to copy messages to user C, and user C has set to copy messages back to user B. In this case, if user A sends a message to user B, the message is copied between users B and C repeatedly forming a closed loop. Another case may be that user B has set to forward messages to user C, and user C has set to copy messages to user B. In this case, if user A sends a message to user B, the message is forwarded and copied between users B and C repeatedly forming a closed loop.

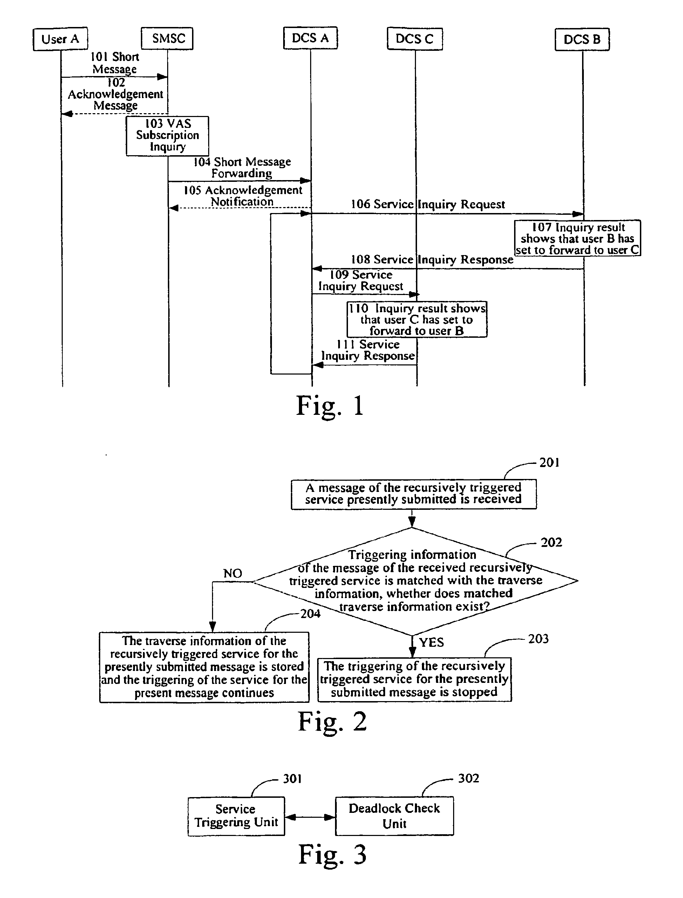

Taking the Short Message Service (SMS) as an example, a flow chart is shown in Figure 1 to illustrate the Short Message Forwarding Service (SMFS) in a home network of the caller. The Short Message Service Center (SMSC) is the short message scheduling center which transmits and receives short messages and stores identifiers of subscribed services of users. A Data Center for Short Message Services (DCS) stores detailed subscription data for Value Added Services (VASs) subscribed by a user, and provides user terminal oriented short message VASs. In other words, the DCS is responsible for the triggering of VASs. As shown in Figure 1, the method includes the following steps:

Step 101: User A submits a short message intended for user B to the home SMSC of user A.

Step 102: The SMSC returns an acknowledgement message to user A.

Step 103: The SMSC inquires about whether user A and user B have subscribed for the short message VAS.

If user A and user B have subscribed for the short message VAS, the originally submitted message is forwarded to and processed by the DCS. In one embodiment, it is assumed that the inquiry shows user A and/or user B have subscribed for the VAS.

Step 104: The SMSC forwards the originally submitted message to DCS A.

Step 105: DCS A returns an acknowledgement, informing the SMSC that the message will be processed by DCS A.

Step 106: It is found by DCS A that user B is not a local user, then a service inquiry request message is sent to the home DCS of user B, i.e., DCS B.

Step 107: The inquiry by DCS B shows that user B has subscribed for the MFS, and the destination number of the MFS is user C.

Step 108: DCS B returns a service inquiry response message to DCS A.

Step 109: It is found by DCS A that user C is not a local user, and a service inquiry request message is sent to the home DCS of user C, i.e., DCS C.

Step 110: The inquiry by DCS C shows that user C has subscribed for MFS, and the destination number of the MFS is set to be user B.

Step 111: DCS C returns a service inquiry response message to DCS A.

Then, DCS A returns to execute step 106, and a service inquiry request message is sent to DCS B once again. In this way, steps 106-111 are executed repeatedly.

When a looping transfer of the above message occurs, not only network resources are wasted, but also the users are charged repeatedly, causing unnecessary loss to the users.
D1 (US 2005/036457 A1) discloses a method for rerouting messages in a mobile communications system allowing rerouting between different networks is described. The method includes a step of setting in a first register node associated with a primary mobile number a request for forwarding messages addressed to the primary mobile number to a second mobile number. The method sends a message addressed to the primary mobile number from a messaging center to a gateway node and sends a request for routing information for routing information for the message from the gateway node to a first register node associated with the primary mobile number. Based on the request for forwarding messages, the method sends a request for routing information for the message from the first register node to a second register node associated with the second mobile number. The method sends a response including the routing information for the message to the gateway node.
D2 (CN101001411 A ) discloses a message transmission method including: circularly testing received messages of forward and CC service and stopping the transmission of said messages when the test is not passed.

### SUMMARY

In one embodiment of the invention, a method and a device for transferring a message is provided to prevent a closed looping transfer of messages.

A method for transferring a message provided in one embodiment of the present invention includes:

receiving a message of a recursively triggered service presently submitted; wherein the recursively triggered service is a Message Forwarding Service or a Message Copying Service;
obtaining traverse information of the message of the recursively triggered service from the received message; wherein the traverse information is numbers the traverse information is numbers which the message has been through such as the caller number, the called number or the destination number of the message;
matching triggering information of the received message of the recursively triggered service with the obtained traverse information, to determine whether matched traverse information exists; wherein the triggering information is a present destination number of the message; wherein the destination number is determined according to the recursively triggered service;
stopping triggering the service for the message if the matched traverse information exists;
storing the traverse information of the message in the message traverse field which is carried in the message of the recursively triggered service, if the matched traverse information does not exists.

A device for transferring a message provided in one embodiment of the present invention includes a service triggering unit, and a deadlock check unit.

The service triggering unit is configured to receive a message of a recursively triggered service and providing information of the received message to the deadlock check unit; to receive a check result of the deadlock check performed by the deadlock check unit on the message of the recursively triggered service; and to stop triggering the service for the message if the deadlock check fails; wherein the recursively triggered service is at least one of a Message Forwarding Service and a Message Copying Service.

The deadlock check unit is configured to perform deadlock check on the message of the recursively triggered service according to the information of the message from the service triggering unit, and to feed the check result back to the service triggering unit. The deadlock check unit comprises an information extracting module; and a check and determination module, wherein:
the information extracting module is configured to extract the traverse information of the message from the information of the message, to inquire about the triggering information of the message from stored user service data, and to provide the extracted traverse information and the inquired triggering information to the check and determination module; wherein the traverse information is numbers
   which the message has been through such as the caller number, the called number or the destination number of the message ; and the triggering information is a present destination number of the message; wherein the destination number is determined according to the recursively triggered service;
the check and determination module is configured to match the triggering information of the message of the recursively triggered service with the traverse information; to determine that the deadlock check fails if matched traverse information exists; to determine that the deadlock check succeeds if matched traverse information does not exist; and to feed the check result back to the service triggering unit; and
the service triggering unit is further configured to carry the traverse information of the message and trigger the service if the deadlock check succeeds. 3b

It is seen from above that in embodiments of the invention, a deadlock check is performed on a received message of a recursively triggered service, and the triggering of the service for the message is stopped if the deadlock check fails. Thus, looping transfer of messages may be prevented, and network resources may be saved.

### BRIEF DESCRIPTION OF THE DRAWINGS

Figure 1 is a flowchart illustrating the SMFS in a home network of the caller in the prior art;

Figure 2 is a flowchart illustrating an exemplary method for transferring a message in one embodiment of the invention;

Figure 3 is a block diagram illustrating an exemplary device for transferring a message in one embodiment of the invention;

Figure 4 is a diagram illustrating the internal structure of a deadlock check unit in the device shown in Figure 3;

Figure 5 is a diagram illustrating another internal structure of a deadlock check unit in the device shown in Figure 3;

Figure 6 is a flowchart illustrating the message transfer service in one embodiment of the invention;

Figure 7 is a flowchart illustrating the message transfer service in another embodiment of the invention; and

Figure 8 is a flowchart illustrating the message transfer service in a further embodiment of the invention.

### DETAILED DESCRIPTION

In one embodiment of the invention, a deadlock check is performed on the received message (e.g. short message or multimedia message) of a recursively triggered service. If the deadlock check fails, the triggering of the service for the message is stopped, and the message is delivered to the present user terminal or deleted. The present user terminal refers to the object which the present service is triggered for. For example, user A sends a message to user B, but user B has set to forward messages to user C, and user C has set to forward messages to user B. When the message is forwarded by the DCS (such as DCS B) which is responsible for the triggering of the service related to user B to the DCS (such as DCS C) which is responsible for the triggering of the service related to user C, and the deadlock check fails, the message is not forwarded by the DCS which is responsible for the triggering of the service related to user C back to the DCS which is responsible for the triggering of the service related to user B. The message may be delivered to user C instead. In this case, user C is the present user terminal.

There are many methods to realize deadlock check. For example, it is determined based on the message of the recursively triggered service and user information whether the message of the recursively triggered service is forwarded back. If the message is forwarded back, the deadlock check fails. The user information may be the user message inside the network, or the user message shared between different operators. In a further embodiment, when the deadlock check succeeds, the traverse information of the message of the recursively triggered service is recorded. In this case, the deadlock check may be matching the triggering information of the received message of the recursively triggered service with the recorded traverse information. If there is a match, the deadlock check is determined as a failure.

The traverse information may be traversed numbers and/or the number of triggerings. The corresponding triggering information may be the present triggering number and/or threshold for the number of triggerings. The case that a match exists between the triggering information of the received message of the recursively triggered service and the recorded traverse information is that a number in the traversed numbers is the same as the present triggering number, and/or the number of triggerings reaches the threshold, etc.

In one embodiment, the traverse information may be carried in the message of the recursively triggered service, or the traverse information may be stored in the DCS.

The purpose, technical solutions and advantages of the present invention will be more apparent from the description of the following embodiments incorporating with the figures.

Figure 2 is an exemplary flowchart illustrating the method of transferring a message according to one embodiment of the invention. As illustrated in Figure 2, the method includes the following steps.

Step 201: A message of the recursively triggered service presently submitted is received.

In this step, the message of the recursively triggered service presently submitted may be received by the DCS or the DCM.

Step 202: The triggering information of the message of the received recursively triggered service is matched with the traverse information, to determine whether matched traverse information exists. If the matched traverse information exists, the check is determined as a failure, and the process proceeds to step 203. If the matched traverse information does not exist, the check is determined as a success, and the process proceeds to step 204.

There are at least the following two methods for recording the traverse information.

Method 1: A message traverse field is defined beforehand. The message traverse field is adapted to store the traverse information of the message of the recursively triggered service. When the message of the recursively triggered service is triggered, the message traverse field of the recursively triggered service is carried.

The recorded traverse information is accordingly the traverse information filled in the message traverse field.

In one embodiment, for the home network of the caller, when a service inquiry request is sent from the home location of the caller (such as the home DCS of the caller) to the home location of the called or the service triggering user (such as the home DCS of the called or the service triggering user), the above message traverse field may be carried in the service inquiry request. The caller number, the called number or the caller number, the called number and the first service triggering number are filled in the message traverse field. When a service inquiry response message is returned from the home location of the called or the service triggering user to the home location of the caller, the above message traverse field may be carried in the service inquiry response message. The caller number, the called number and the first service triggering number or the caller number, the called number, the first service triggering number and the second service triggering number are filled in the message traverse field. It is seen that the message traverse field may be carried in the service inquiry message.

In another embodiment, for the home network of the called, when a service forwarding message is sent from the home location of the caller (such as the home DCS of the caller) to the home location of the called (such as the home DCS of the called), the above message traverse field may be carried in the service forwarding message. The caller number and the called number are filled in the message traverse field. When a service forwarding message is sent from the home location of the called to the home location of the service triggering user, the above message traverse field may be carried in the service forwarding message. The caller number, the called number and the service triggering number are filled in the message traverse field. It is seen that the message traverse field may be carried in the service forwarding message.

In a further embodiment, for different networks or different operators, when an interconnecting network between the different networks or different operators submits a message to the SMSC, or the SMSC sends a service forwarding message to the DCS, the above message traverse field may be carried in the message. The caller number, the called number and the service triggering number are filled in the message traverse field.

Method 2: A message information storage area may be defined beforehand in the DCS which triggers the recursively triggered service, and is used to store the traverse information of the message of the recursively triggered service. When a message of the recursively triggered service is sent, the traverse information corresponding to the message of the recursively triggered service is stored in the defined storage area. The recorded traverse information is the traverse information filled in the storage area of the message information.

The traverse information may be the traversed number of the message of the recursively triggered service. Taking the MFS as an example, the traverse information may include the caller number, the called number and the traversed MFS numbers, and/or the traverse information may be the number of triggerings. Taking the MFS as an example, the traverse information may include the present number of times by which the message is forwarded.

In the present step, when the deadlock check is performed, the traverse information of the message of the recursively triggered service may be obtained from the received message for method 1, and the traverse information of the message of the recursively triggered service may be obtained from the message information storage area in the DCS for method 2.

When the triggering information of the received message of the recursively triggered service is matched with the recorded traverse information, if traversed numbers are included in the traverse information, the triggering information should include the present triggering number. The match may be performed to find out whether a number the same as the present triggering number exists in the traversed numbers. If there is a matching number in the traversed numbers, the deadlock check is determined as a failure. If there is not any matching number in the traversed numbers, the deadlock check is determined as a success. If the number of triggerings is included in the traverse information, the triggering information should include the threshold of the number of triggerings. The match may be performed to find out whether the number of triggerings reaches the threshold of the number of triggerings. If the number of triggerings reaches the threshold, the deadlock check is determined as a failure. If the number of triggerings does not reach the threshold, the deadlock check is determined as a success. If the traversed numbers and the number of triggerings are both included in the traverse information, the triggering information may include both the present triggering number and the threshold of the number of triggerings. If a number the same as the present triggering number exists in the traversed numbers and/or the number of triggerings reaches the threshold of the number of triggerings, the deadlock check is determined as a failure. Otherwise, the deadlock check is determined as a success. If both the traversed numbers and the number of triggerings are included in the traverse information, the traverse information may alternatively include one of the present triggering numbers and the threshold of the number of triggerings. In this case, if a number the same as the present triggering number exists in the traversed numbers or the number of triggerings reaches the threshold of the number of triggerings, the deadlock check is determined as a failure. Otherwise, the deadlock check is determined as a success.

Step 203: The triggering of the recursively triggered service for the presently submitted message is stopped, and the process ends.

In this step, the triggering of the recursively triggered service for the presently submitted message is stopped. For example, for the message of MFS, its forwarding is stopped. The step may further include deleting the presently submitted message, or no process is performed for this message. The message may alternatively be delivered to the present user terminal. The traverse information corresponding to the message may further be deleted.

Step 204: The traverse information of the recursively triggered service for the presently submitted message is stored and the triggering of the service for the present message continues.

In this step, for method 1 described in the description of step 202, the traverse information of the message of the presently submitted recursively triggered service is stored in the message traverse field, the triggering of the present message continues, and the message traverse field is carried for transfer. For the method 2 described in the description of step 202, the message of the presently submitted recursively triggered service is stored in the message information storage area, and the triggering of the present message continues.

If traversed numbers are included in the traverse information and the message traverse field or the message information storage area is empty, the caller number, the called number and the present triggering number should be added when traverse information is stored in the message traverse field or the message information storage area. If the message traverse field or the message information storage area is not empty, or in other words, the caller number, the called number and the traversed triggering numbers are stored in them, the present triggering number needs to be added.

If the number of triggerings is included in the traverse information, the present number of triggerings needs to be updated every time when the number of triggerings is stored in the message traverse field or the message information storage area.

Then, the process ends.

A method of transferring a message according to one embodiment of the invention has been described above in detail. The device for transferring a message according to one embodiment of the invention will be described below in detail.

Figure 3 is a block diagram illustrating the device for transferring a message according to one embodiment of the invention. As illustrated in Figure 3, the device includes a service triggering unit 301 and a deadlock check unit 302.

The service triggering unit 301 is configured to receive a message of a recursively triggered service and providing information of the received message to the deadlock check unit 302. The check result from the deadlock check unit is received. The triggering of the service for the message is stopped if the deadlock check fails.

The deadlock check unit 302 is configured to perform deadlock check on the message of the recursively triggered service according to the information of the message from the service triggering unit 301, and to feed the check result back to the service triggering unit 301.

Specifically, the deadlock check unit 302 may be implemented in a variety of ways. Two examples are shown below.

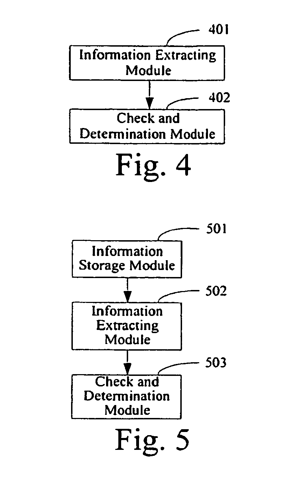

Figure 4 is a block diagram illustrating the internal structure of the deadlock check unit 302 according to one embodiment of the invention. As illustrated in Figure 4, the deadlock check unit 302 includes an information extracting module 401 and a check and determination module 402.

The information extracting module 401 is configured to extract the traverse information of the message of the recursively triggered service from the information of the message of the recursively triggered service, to inquire about the triggering information of the message from the stored user service data, and to provide the extracted traverse information and the triggering information obtained by inquiry to the check and determination module 402.

The check and determination module 402 is configured to match the triggering information of the message of the recursively triggered service with the traverse information; to determine that the deadlock check fails if there is a match; to determine that the deadlock check succeeds if there is not any match; and to feed the check result back to the service triggering unit 301.

The service triggering unit 301 is configured to carry the traverse information of the message and trigger the service if the deadlock check succeeds.

Figure 5 is a block diagram illustrating another internal structure of the deadlock check unit 302. As illustrated in Figure 5, the deadlock check unit 302 includes an information storage module 501, an information extracting module 502 and a check and determination module 503.

The information storage module 501 is configured to store the traverse information of the message on which the deadlock check succeeds.

The information extracting module 502 is configured to extract the traverse information of the message of the recursively triggered service from the information storage module 501, to inquire about the triggering information of the message from stored user service data, and to provide the extracted traverse information and the triggering information inquired for to the check and determination module 503.

The check and determination module 503 is configured to match the triggering information of the message of the recursively triggered service with the traverse information; to determine that the deadlock check fails if there is a match; to determine that the deadlock check succeeds if there is not any match; and to feed the check result back to the service triggering unit.

The service triggering unit 301 is configured to further provide the traverse information of the service to the information storage module 501 if the deadlock check succeeds.

The message transfer device may be implemented in a DCS or an MCS.

The specific operations of the function units of the device illustrated in Figure 3 may be in accordance with the steps in the above described methods.

A method and a device for transferring a message in one embodiment of the invention have been described in detail. A method and a device for transferring a message according to one embodiment of the invention are described below in detail with reference to specific examples, taking the SMS as an example and assuming a case of recursive deadlock in the SMS.

In all the embodiments described below, the case of adding a message transfer field that may be carried and transferred is taken as an example, and the message traverse field is noted ForwardTrace field, as shown in Table 1.

**Table 1**

| | | | |
|---|---|---|---|
| ForwardTrace | Variable Length (Var) 0-420 | String Type (C_OctetString) | Table of Traversed Numbers of Message, Variable Length |

### Embodiment 1

In this embodiment, the case that a forwarding loop exists in the home network of the caller is taken as an example. It is assumed that user A sends a short message to user B, user B has set to forward messages to user C, and user C has also set to forward messages to user B. It is also assumed that the operations about message forwarding are described. Other operations in the SMSC such as authentication and debiting are not described.

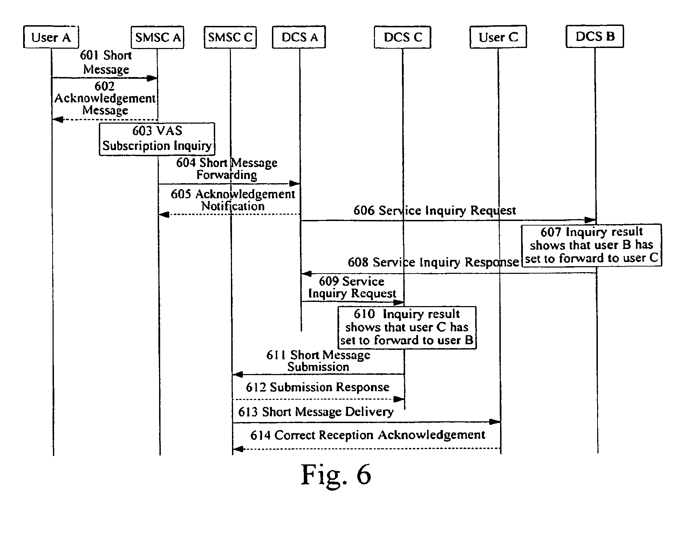

Figure 6 is a flowchart illustrating the short message transfer service according to one embodiment of the invention. As illustrated in Figure 6, the process includes the following steps.

Step 601: User A submits the short message intended for user B to the home SMSC A of user A.

Step 602: SMSC A returns an acknowledgement message to user A.

Step 603: SMAC A inquires about whether user A and user B have subscribed for the short message VAS.

If the short message VAS is subscribed for, the originally submitted message is forwarded to and processed by the DCS. In one embodiment of the invention, it is assumed that the inquiry shows that the users have subscribed for VAS.

Step 604: SMSC A forwards the originally submitted message to DCS A.

Step 605: DCS A returns an acknowledgement to SMSC A, notifying SMSC A that this message will be processed by DCS A.

Step 606: It is found by DCS A that user B is not a local user, and a service inquiry request message is sent to the home DCS of user B, i.e., DCS B.

In this step, a ForwardTrace field is carried in the service inquiry request message, and the caller number and the called number are filled in the field, such as in the form of [A-B].

Step 607: The inquiry by DCS B shows that user B has subscribed for MFS, and the destination number of the MFS is user C.

A matching is performed by DCS B between the content of the ForwardTrace field and the destination number C of the MFS. If a number the same as the destination number of the MFS is found in the ForwardTrace field, the process proceeds to step 608.

Step 608: DCS B returns a service inquiry response message to DCS A.

In this step, a ForwardTrace field is carried in the service inquiry response message, and the destination number of the MFS C is filled in the field. In other words, the content of the field may be [A-B-C].

Step 609: It is found by DCS A that user C is not a local user, and a service inquiry request message is sent to the home DCS of user C, i.e., DCS C.

In this step, a ForwardTrace field is carried by DCS A in the service inquiry request message, and the caller number, the called number and the destination number of the MFS C are filled in the field. In other words, the content of the field may be [A-B-C].

Step 610: The inquiry by DCS C shows that user C has subscribed for MFS, and the destination number of the MFS is set to be user B.

A matching is performed by DCS C between the content of the ForwardTrace field and the destination number B of the MFS obtained by the present inquiry. If a number the same as the destination number B of the MFS is found in the ForwardTrace field, the check is determined as a failure, the process of the call forwarding is stopped, and the process proceeds to step 611.

Step 611: DCS C submits the short message to SMSC C.

Step 612: SMSC C returns a submission response to DCS C.

Step 613: SMSC C delivers the short message to USER C.

Step 614: User C returns a correct reception acknowledgement to SMSC C.

### Embodiment 2

In this embodiment, the case that a forwarding loop exists in the home network of the called is taken as an example. It is assumed that user A sends a short message to user B, user B has set to forward messages to user C, and user C has also set to forward messages to user B. It is also assumed that the operations about message forwarding are described. Other operations in the SMSC such as authentication and debiting are not described.

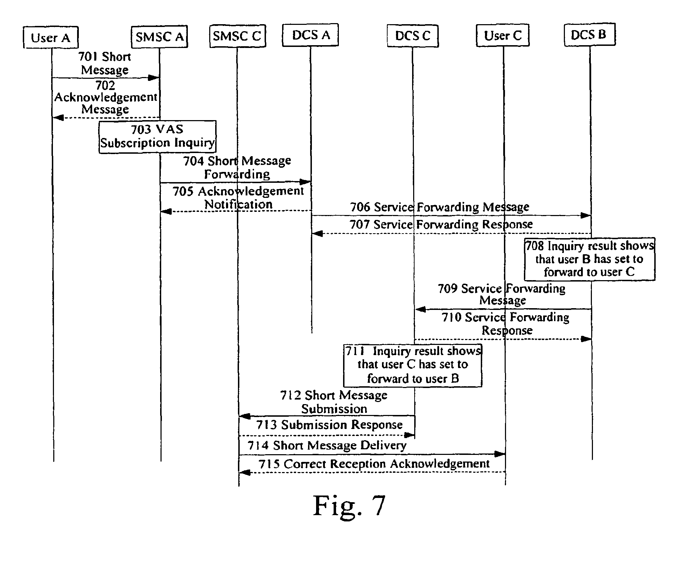

Figure 7 is a flowchart illustrating the short message transfer service according to one embodiment of the invention. As illustrated in Figure 7, the process includes the following steps.

Step 701: User A submits the short message intended for user B to the home SMSC A of user A.

Step 702: SMSC A returns an acknowledgement message to user A.

Step 703: SMAC A inquires about whether user A and user B have subscribed for the short message VAS.

If the short message VAS is subscribed for, the originally submitted message is forwarded to and processed by the DCS. In one embodiment of the invention, it is assumed that the inquiry shows that the users have subscribed for VAS.

Step 704: SMSC A forwards the originally submitted message to DCS A.

Step 705: DCS A returns an acknowledgement to SMSC A, notifying SMSC A that this message will be processed by DCS A.

Step 706: It is found by DCS A that user B is not a local user, and a service forwarding message is sent to the home DCS of user B, i.e., the service message is forwarded to DCS B.

In this step, a ForwardTrace field is carried in the service forwarding message, and the caller number and the called number are filled in the field, such as in the form of [A-B].

Step 707: DCS B returns a forwarding response message to DCS A.

Step 708: The inquiry by DCS B shows that user B has subscribed for MFS, and the destination number of the MFS is user C.

A matching is performed by DCS B between the content of the ForwardTrace field and the destination number C of the MFS. If a number the same as the destination number of the MFS is found in the ForwardTrace field, the process proceeds to step 709.

Step 709: It is found by DCS B that user C is not a local user, and a service forwarding message is sent to the home DCS of user C, i.e., the service message is forwarded to DCS C.

In this step, a ForwardTrace field is carried in the service forwarding message, and the caller number, the called number and the destination number C are filled in the field, i.e., the content of the field may be in the form of [A-B-C].

Step 710: DCS C returns a response message to DCS B.

Step 711: It is found by DCS C that user C has subscribed for the MFS, and the destination number of the MFS is B.

A matching is performed by DCS C between the content of the ForwardTrace field and the destination number B of the MFS. If a number the same as the destination number B of the MFS is found in the ForwardTrace field, the deadlock check is determined as a failure, the message forwarding process is stopped and the process proceeds to step 712.

Step 712: DCS C submits the short message to SMSC C.

Step 713: SMSC C returns a submission response to DCS C.

Step 714: SMSC C delivers the short message to user C.

Step 715: User C returns a correct reception acknowledgement to SMSC C.

### Embodiment 3

In this embodiment, th e case that a forwarding loop exists between different networks or different operators is taken as an example. It is assumed that user A sends a short message to user B, user B has set to forward messages to user A, and user A has also set to forward messages to user B. It is also assumed that the operations about message forwarding are described. Other operations in the SMSC such as authentication and debiting are not described.

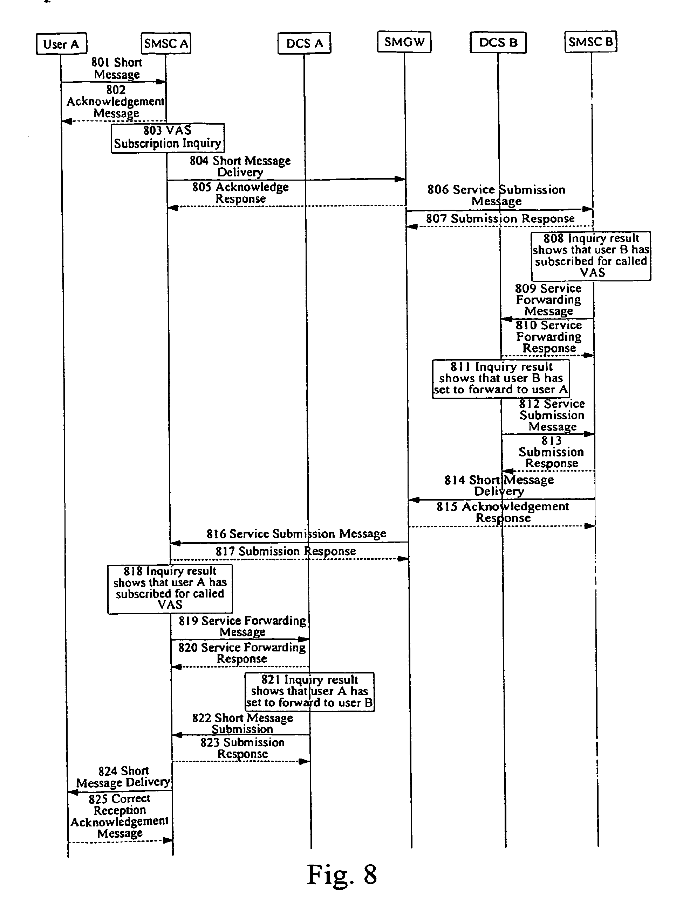

Figure 8 is a flowchart illustrating the short message transfer service according to one embodiment of the invention. As illustrated in Figure 8, the process includes the following steps.

Step 801: User A submits the short message intended for user B to the home SMSC A of user A.

Step 802: SMSC A returns an acknowledgement message to user A.

Step 803: SMAC A inquires about whether user A and user B have subscribed for the short message VAS.

In this embodiment, it is assumed that the inquiry shows that A has subscribed for SMFS, and user B is a user of an external network. The process proceeds to step 804.

Step 804: SMSC A delivers the original message to the Short Message GateWay (SMGW) to process the short message VAS subscribed by the user.

The SMGW is the bridge for communicating short messages between different operators or different networks, and functions to forward messages. Differences between network types and protocol types may be masked out by forwarding through an SMGW.

Step 805: The SMGW returns an acknowledgement to SMSC A.

Step 806: The SMGW submits the message to the SMSC which the called belongs to, i.e., SMSC B.

Step 807: SMSC B returns an acknowledgement to the SMGW.

Step 808: The inquiry by the SMSC B shows that user B has subscribed for the short message VAS.

Step 809: SMSC B forwards the originally submitted message to DCS B to be processed by DCS B.

Step 810: DCS B returns an acknowledgement to SMSC B, notifying SMSC B that the message will be processed by DCS B.

Step 811: It is found by DCS B that user B has subscribed for forwarding service, and the forwarding destination is user A.

Step 812: DCS B submits the message to SMSC B, specifying user A as the called user.

In this step, DCS B causes the ForwardTrace field to be carried in the service submission message, and the caller number, the called number and the destination number A of the MFS are filled in the field, i.e., the content of the field may be [A-B-A].

Step 813: SMSC B returns an acknowledgement to DCS B.

Step 814: The inquiry by SMSC B shows that user A is a user of an external network, and SMSC B delivers a message for replacing the destination number to the SMGW.

In this step, the ForwardTrace field filled with the caller number, the called number and the forwarding number is sent by SMSC B. The content of the field is [A-B-A].

Step 815: The SMGW returns an acknowledgement to SMSC B.

Step 816: The SMGW delivers the message SMSC A which user A belongs to.

In this step, the ForwardTrace field filled with the caller number, the called number and the forwarding number is carried in the service submission message.

Step 817: SMSC A returns an acknowledgement to the SMGW.

Step 818: The inquiry by SMSCA shows that user A has subscribed for the short message VAS.

Step 819: SMSC A forwards the message to DCS A to be processed by DCS A.

In this step, the ForwardTrace field filled with the caller number, the called number and the forwarding number is carried in the message.

Step 820: DCS A returns an acknowledgement to SMSC A, notifying SMSC A that this message will be processed by DCS A.

Step 821: It is found by DCS A that user A has subscribed for the MFS, and the destination number of the MFS is B.

A matching is performed by DCS A between the content of the ForwardTrace field and the called number B obtained by the inquiry, and the number B is found in the content. The deadlock check is then determined as a failure. The message forwarding process is stopped and step 822 is executed.

Step 822: DCS A submits the short message to SMSC A.

Step 823: SMSC A returns a submission response to DCS A.

Step 824: SMSC A delivers the short message to user A.

Step 825: User A returns a correct reception acknowledgement to SMSC C.

In the three embodiments described above, the case in which the traverse information is the traversed numbers is taken as an example. If the traverse information is the number of triggerings, the operations are similar. The operation of carrying the field of ForwardTrace is needed to be replaced with carrying a field filled with the number of triggerings. For example, a ForwardTimes field may be set for the trigger times to be filled in, as shown in Table 2.

**Table 2**

| | | | |
|---|---|---|---|
| ForwardTimes | 1 | Integer | Number of Triggerings |

The operation of filling new traversed numbers should be changed to updating the number of triggerings in the ForwardTimes field, and the operation of matching the current triggering number with the traversed numbers should be changed to comparing the number of triggerings with a threshold of the number of triggerings.

Alternatively, the ForwardTrace field and the ForwardTimes field may be carried simultaneously. In this case, a double matching is performed. The deadlock check is to be a failure if any one of the two matching operations shows that a matching exists.

For the setting of the storage area for message information in the DCS, please refer to the case described above, and is not described here in detail.

For the internal structure of the DCS in the embodiments, please refer to the device described in Figures 3 to 5.

From the above description of embodiments, it is apparent to the person skilled in the art that the invention may be realized by means software, hardware or both of them. The software may be stored in a storage medium, such as ROM/RAM, disks, including instructions for a computer, such as a Personal Computer, a server or a network device, to implement the embodiments.

## Claims

1. A method for transferring a message, **characterized in** comprising:
receiving a message of a recursively triggered service presently submitted (201);
wherein the recursively triggered service is a Message Forwarding Service or a Message Copying Service;
obtaining traverse information of the message of the recursively triggered service from the received message; wherein the traverse information is numbers which the message has been through such as the caller number, the called number or the destination number of the message;
matching triggering information of the received message of the recursively triggered service with the obtained traverse information, to determine whether matched traverse information exists (202); wherein the triggering information is a present destination number of the message; wherein the destination number is determined according to the recursively triggered service;
stopping triggering the service for the message if the matched traverse information exists (203);
storing the traverse information of the message in the message traverse field which is carried in the message of the recursively triggered service, if the matched traverse information does not exists (204).

2. The method of claim 1, **characterized in that** the message carrying the message traverse field is at least one of a service inquiry message, a service forwarding message and a service submitting message.

3. The method of anyone of claims 1 to 2, **characterized in** further comprising:
if the matched traverse information exists, distributing the message to a present user terminal or deleting the message.

4. The method of claim 3, **characterized in** further comprising:
deleting the traverse information of the message if the matched traverse information exists.

5. A device for transferring a message, **characterized in** comprising:
a service triggering unit (301), and
a deadlock check unit (302), wherein:
the service triggering unit (301) is configured to receive a message of a recursively triggered service and provide information of the received message to the deadlock check unit (302); to receive a check result of the deadlock check performed by the deadlock check unit (302) on the message of the recursively triggered service; and to stop triggering the service for the message if the deadlock check fails; wherein the recursively triggered service is at least one of a Message Forwarding Service and a Message Copying Service; and
the deadlock check unit (302) is configured to perform deadlock check on the message of the recursively triggered service according to the information of the message from the service triggering unit (301), and to feed the check result back to the service triggering unit (301);
the deadlock check unit (302) comprises:
an information extracting module (401); and
a check and determination module (402), wherein:
the information extracting module is (401) configured to extract the traverse information of the message from the information of the message, to inquire about the triggering information of the message from subscription data of the recursively triggered service subscribed by a user, and to provide the extracted traverse information and the inquired triggering information to the check and determination module (402); wherein the traverse information is numbers which the message has been through such as the caller number, the called number or the destination number of the message ; and the triggering information is a present destination number, of the message; wherein the destination number is determined according to the recursively triggered service;
the check and determination module (402) is configured to match the triggering information of the message of the recursively triggered service with the traverse information; to determine that the deadlock check fails if matched traverse information exists; to determine that the deadlock check succeeds if matched traverse information does not exist; and to feed the check result back to the service triggering unit (301); and
the service triggering unit (301) is further configured to carry the traverse information of the message and trigger the service if the deadlock check succeeds.

6. The device of claim 5, **characterized in that** the device is located at least one of:
a Data Center for Short Message Service; and
a Data Center for Multimedia Service.

7. A computer readable storage medium having stored thereon instructions for implementing the method of anyone of claims 1-4.

## Patentansprüche

1. Verfahren zum Übermitteln einer Nachricht, **gekennzeichnet durch** die folgenden Schritte:
Empfangen einer Nachricht eines rekursiv getriggerten Dienstes, die derzeit eingereicht wird (201); wobei der rekursiv getriggerte Dienst ein Nachrichtenweiterleitungsdienst oder ein Nachrichtenkopierdienst ist;
Erhalten von Durchquerungsinformationen der Nachricht des rekursiv getriggerten Dienstes aus der empfangenen Nachricht; wobei die Durchquerungsinformationen Zahlen sind, die die Nachricht durchlaufen hat, wie etwa die Anrufernummer, die angerufene Nummer oder die Zielnummer der Nachricht;
Vergleichen von Triggerungsinformationen der empfangenen Nachricht des rekursiv getriggerten Dienstes mit den erhaltenen Durchquerungsinformationen, um zu bestimmen, ob übereinstimmende Durchquerungsinformationen existieren (202);
wobei die Triggerungsinformationen eine derzeitige Zielnummer der Nachricht sind;
wobei die Zielnummer gemäß dem rekursiv getriggerten Dienst bestimmt wird;
Stoppen des Triggerns des Dienstes für die Nachricht, wenn die übereinstimmenden Durchquerungsinformationen existieren (203);
Speichern der Durchquerungsinformationen der Nachricht in dem Nachrichtendurchquerungsfeld, das in der Nachricht des rekursiv getriggerten Dienstes geführt wird, wenn die übereinstimmenden Durchquerungsinformationen nicht existieren (204).

2. Verfahren nach Anspruch 1, **dadurch gekennzeichnet, dass** die Nachricht, die das Nachrichtendurchquerungsfeld führt, mindestens eine der folgenden Alternativen ist:
eine Dienstanfragenachricht, eine Dienstweiterleitungsnachricht und eine Diensteinreichungsnachricht.

3. Verfahren nach einem der Ansprüche 1 bis 2, **dadurch gekennzeichnet, dass** es ferner Folgendes umfasst:
wenn die übereinstimmenden Durchquerungsinformationen existieren, Verteilen der Nachricht an ein derzeitiges Benutzerendgerät oder Löschen der Nachricht.

4. Verfahren nach Anspruch 3, **dadurch gekennzeichnet, dass** es ferner Folgendes umfasst:
Löschen der Durchquerungsinformationen der Nachricht, wenn die übereinstimmenden Durchquerungsinformationen existieren.

5. Einrichtung zum Übermitteln einer Nachricht, **dadurch gekennzeichnet, dass** sie Folgendes umfasst:
eine Diensttriggerungseinheit (301) und
eine Deadlock-Prüfeinheit (302), wobei
die Diensttriggerungseinheit (301) dafür ausgelegt ist, eine Nachricht eines rekursiv getriggerten Dienstes zu empfangen und Informationen der empfangenen Nachricht der Deadlock-Prüfeinheit (302) zuzuführen; ein Prüfergebnis der durch die Deadlock-Prüfeinheit (302) an der Nachricht des rekursiv getriggerten Dienstes ausgeführten Deadlock-Prüfung zu empfangen; und das Triggern des Dienstes für die Nachricht zu stoppen, wenn die Deadlock-Prüfung fehlschlägt; wobei der rekursiv getriggerte Dienst ein Nachrichtenweiterleitungsdienst und/oder ein Nachrichtenkopierdienst ist; und
die Deadlock-Prüfeinheit (302) dafür ausgelegt ist, eine Deadlock-Prüfung an der Nachricht des rekursiv getriggerten Dienstes gemäß den Informationen der Nachricht aus der Diensttriggerungseinheit (301) auszuführen und das Prüfergebnis an die Diensttriggerungseinheit (301) rückzumelden;
die Deadlock-Prüfeinheit (302) Folgendes umfasst:
ein Informationsextraktionsmodul (401); und
ein Prüf- und Bestimmungsmodul (402), wobei
das Informationsextraktionsmodul (401) dafür ausgelegt ist, die Durchquerungsinformationen der Nachricht aus den Informationen der Nachricht zu extrahieren,
über die Triggerungsinformationen der Nachricht aus Subskriptionsdaten des rekursiv getriggerten Dienstes, der durch einen Benutzer subskribiert wird, anzufragen, und die extrahierten Durchquerungsinformationen und die angefragten Triggerungsinformationen dem Prüf- und Bestimmungsmodul (402) zuzuführen;
wobei die Durchquerungsinformationen Zahlen sind, die die Nachricht durchlaufen hat, wie etwa die Anrufernummer, die angerufene Nummer oder die Zielnummer der Nachricht; und die Triggerungsinformationen eine derzeitige Zielnummer der Nachricht sind; wobei die Zielnummer gemäß dem rekursiv getriggerten Dienst bestimmt wird;
das Prüf- und Bestimmungsmodul (402) dafür ausgelegt ist, die Triggerungsinformationen der Nachricht des rekursiv getriggerten Dienstes mit den Durchquerungsinformationen zu vergleichen; zu bestimmen, dass die Deadlock-Prüfung fehlschlägt, wenn übereinstimmende Durchquerungsinformationen existieren; zu bestimmen, dass die Deadlock-Prüfung erfolgreich ist, wenn keine übereinstimmenden Durchquerungsinformationen existieren; und das Prüfergebnis an die Diensttriggerungseinheit (301) rückzumelden; und
die Diensttriggerungseinheit (301) ferner dafür ausgelegt ist, die Durchquerungsinformationen der Nachricht zu führen und den Dienst zu triggern, wenn die Deadlock-Prüfung erfolgreich ist.

6. Einrichtung nach Anspruch 5, **dadurch gekennzeichnet, dass** sich die Einrichtung in mindestens einer der folgenden Alternativen befindet:
einer Datenzentrale für Kurznachrichtendienst; und
einer Datenzentrale für Multimedia-Dienst.

7. Computerlesbares Speichermedium, auf dem Anweisungen zum Implementieren des Verfahrens nach einem der Ansprüche 1-4 gespeichert sind.

## Revendications

1. Procédé de transfert d'un message, **caractérisé en ce qu'**il comprend :
la réception d'un message d'un service déclenché de manière récursive actuellement soumis (201), où le service déclenché de manière récursive est un service de réacheminement de messages ou un service de copie de messages,
l'obtention d'informations de traversée du message du service déclenché de manière récursive à partir du message reçu, où les informations de traversée sont des numéros que le message a traversé tels que le numéro d'appelant, le numéro appelé ou le numéro de destination du message,
la mise en correspondance d'informations de déclenchement du message reçu du service déclenché de manière récursive avec les informations de traversée obtenues,
afin de déterminer si des informations de traversée appariées existent (202), où les informations de déclenchement sont un numéro de destination actuel du message, où le numéro de destination est déterminé selon le service déclenché de manière récursive,
l'arrêt du déclenchement du service pour le message si les informations de traversée appariées existent (203),
la mise en mémoire des informations de traversée du message dans le champ de traversée de message qui est transporté dans le message du service déclenché de manière récursive, si les informations de traversée appariées n'existent pas (204).

2. Procédé selon la revendication 1, **caractérisé en ce que** le message transportant le champ de traversée de message est au moins l'un parmi un message de demande de service, un message de réacheminement de service et un message de soumission de service.

3. Procédé selon l'une quelconque des revendications 1 ou 2, **caractérisé en ce qu'**il comprend en outre :
si les informations de traversée appariées existent, la distribution du message à un terminal d'utilisateur actuel ou la suppression du message.

4. Procédé selon la revendication 3, **caractérisé en ce qu'**il comprend en outre :
la suppression des informations de traversée du message si les informations de traversée appariées existent.

5. Dispositif de transfert d'un message, **caractérisé en ce qu'**il comprend :
une unité de déclenchement de service (301), et
une unité de vérification de blocage (302), où :
l'unité de déclenchement de service (301) est configurée de façon à recevoir un message d'un service déclenché de manière récursive et à fournir des informations du message reçu à l'unité de vérification de blocage (302), à recevoir un résultat de vérification de la vérification de blocage exécutée par l'unité de vérification de blocage (302) sur le message du service déclenché de manière récursive, et à arrêter le déclenchement du service pour le message si la vérification de blocage échoue, où le service déclenché de manière récursive est au moins un parmi un service de réacheminement de messages et un service de copie de messages, et
l'unité de vérification de blocage (302) est configurée de façon à exécuter une vérification de blocage sur le message du service déclenché de manière récursive en fonction des informations du message provenant de l'unité de déclenchement de service (301), et à renvoyer le résultat de vérification à l'unité de déclenchement de service (301),
l'unité de vérification de blocage (302) comprend :
un module d'extraction d'informations (401), et
un module de détermination et de vérification (402), où :
le module d'extraction d'informations (401) est configuré de façon à extraire les informations de traversée du message à partir des informations du message, à se renseigner à propos des informations de déclenchement du message à partir de données d'abonnement du service déclenché de manière récursive souscrit par un utilisateur, et à fournir les informations de traversée extraites et les informations de déclenchement obtenues au module de détermination et de vérification (402), où les informations de traversée sont des numéros que le message a traversé tels que le numéro d'appelant, le numéro appelé ou le numéro de destination du message, et les informations de déclenchement sont un numéro de destination actuel du message, où le numéro de destination est déterminé en fonction du service déclenché de manière récursive,
le module de détermination et de vérification (402) est configurée de façon à apparier les informations de déclenchement du message du service déclenché de manière récursive avec les informations de traversée, à déterminer que la vérification de blocage échoue si des informations de traversée appariées existent, à déterminer que la vérification de blocage réussit si des informations de traversée appariées n'existent pas, et à renvoyer le résultat de vérification à l'unité de déclenchement de service (301), et
l'unité de déclenchement de service (301) est configurée en outre de façon à transporter les informations de traversée du message et à déclencher le service si la vérification de blocage réussit.

6. Dispositif selon la revendication 5, **caractérisé en ce que** le dispositif est installé dans au moins un parmi :
un centre de données pour un service de messages courts, et
un centre de données pour service multimédia.

7. Support à mémoire lisible par ordinateur contenant en mémoire des instructions destinées à la mise en oeuvre du procédé selon l'une quelconque des revendications 1 à 4.
